Europäisches Patentamt

European Patent Office

Office européen des brevets

(19)

(11) **EP 1 244 256 A2**

(12) **EUROPÄISCHE PATENTANMELDUNG**

(43) Veröffentlichungstag:
    25.09.2002  Patentblatt 2002/39

(51) Int Cl.⁷: **H04L 12/56**

(21) Anmeldenummer: 02100256.3

(22) Anmeldetag: **14.03.2002**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **21.03.2001  DE 10113838
                12.12.2001  DE 10161135**

(71) Anmelder: **SIEMENS AKTIENGESELLSCHAFT**
    **80333 München (DE)**

(72) Erfinder: **Engel, Thomas**
    **85579, Unterbiberg (DE)**

(54) **Verfahren und Vorrichtung zur dynamischen Regelung der Ressourcenaufteilung in einem Kommunikationsnetz**

(57)   Aus einem Ressourcen-Pool (RP) wird für jeden konkurrierenden Datenstrom (RPS) ein bestimmter Anteil (RS) entnommen und zugeordnet. Anhand von Messdaten werden bei Bedarf dynamisch Anpassungen vorgenommen, indem die beteiligten RPS nicht benötigte Ressourcen an den gemeinsamen RP zurückgeben, bzw. ihnen größere Anteile aus dem gemeinsamen RP zugewiesen werden. Erreicht der Ressourcenbedarf einen vorgegebenen Schwellwert nahe dem zugewiesenen RS, dann wird sein Anteil erhöht, insofern noch nicht zugewiesene Ressourcen im RP vorhanden sind. Ist eine Erhöhung des RSs nicht möglich, dann wird erst nach Ablauf einer vorgegebenen Zeitspanne erneut geprüft ob eine Erhöhung notwendig (gemessener Bedarf hat Schwellwert erreicht) und möglich ist. Umgekehrt wird ein bestimmter Teil eines RSs an den gemeinsamen RP zurückgegeben, wenn dieser für eine vorgegebene Zeitspanne nicht benötigt wurde. Ist der gemeinsame RP jedoch mindestens bis zu einem vorgegebenen Schwellwert gefüllt, dann wird die Rückgabe nicht vorgenommen und zunächst erneut geprüft ob der zurückzugebende Anteil für eine weitere Zeitspanne der vorgegebenen Länge nicht benötigt wird.

## FIG 1

EP 1 244 256 A2

**Beschreibung**

Die Erfindung betrifft ein Verfahren sowie eine korrespondierende Vorrichtung zur dynamischen Regelung einer Ressourcenaufteilung auf eine Mehrzahl von um diese Ressourcen konkurrierende Datenströme in einem Kommunikationsnetz, wobei die aufzuteilenden Ressourcen in einem Ressourcen-Pool bereitgestellt werden, aus dem für jeden konkurrierenden Datenstrom ein Ressourcen-Anteil entnommen und diesem Datenstrom zugeordnet wird.

Zukünftig sollen heute gebräuchliche IP-Netze zusätzliche Transportdienste anbieten, die sich bzgl. der Verfügbarkeit von Bandbreite, Delay (Verzögerungen), Delay-Jitter und der Paketverlustrate deutlich von der heutigen Dienstgüte unterscheiden.

Die Abkürzung IP steht dabei für "Internet Protocol", ein Protokoll der TCP/IP-Familie auf Schicht 3 des OSI-Referenzmodells. IP ist für den verbindungslosen Transport von Daten vom Sender über mehrere Netze zum Empfänger zuständig, wobei keine Fehlererkennung oder -korrektur erfolgt, d.h. IP kümmert sich nicht um schadhafte oder verlorengegangene Pakete. Als zentrale datentragende Einheit wird im IP das Datagramm definiert, das eine Länge von bis zu 65535 Bytes haben kann.

IP wird von mehreren darüberliegenden Protokollen genutzt, hauptsächlich von TCP (Transmission Control Protocol, ein verbindungsorientiertes Transportprotokoll, das eine logische Vollduplex-Punkt-zu-Punkt-Verbindung ermöglicht), aber auch von UDP (User Datagram Protocol, ein verbindungsloses Anwendungsprotokoll zum Transport von Datagrammen der IP-Familie).

Zu übertragende Daten werden von solchen Protokollen oberhalb von IP entgegengenommen und vom Sender fragmentiert, d.h. in Datagramme zerlegt. Empfängerseitig werden diese wieder zusammengesetzt, wobei man von defragmentieren spricht. IP ist vom genutzten Medium unabhängig und gleichfalls für LANs (Local Area Networks), WANs (Wide Area Networks) sowie für mobile Netzwerke geeignet.

Der Zugang zu den oben erwähnten neuen Transportdiensten muss durch Admission-Control (AC) geschützt werden. Dabei entsteht das Problem, das die in IP-Netzen verfügbaren Übertragungsressourcen auf konkurrierenden Transportdienste und Verkehrsströme aufgeteilt werden müssen. Die Ressourcen müssen sowohl auf die verschiedenen Transportdienste, als auch auf die konkurrierenden Verkehrsströme eines Transportdienstes, die an verschiedenen Netzzugängen entstehend, aufgeteilt werden.

Ungünstige Aufteilungen führen zu einer schlechten Auslastung (wenn einem Verkehrsstrom mehr Ressourcen zugeteilt sind als er benötigt und diese Ressourcen dadurch anderen nicht mehr zur Verfügung stehen), oder für den Anwender deutlich spürbare Qualitätseinbußen (hohen Blockierrate, große Delays bis zu Paketverlusten, wenn zu wenig Ressourcen zugeteilt sind). Erschwerend kommt hinzu, dass der Ressourcenbedarf eine schwer zu schätzende, stark fluktuierende statistische Größe ist.

In Telefonnetzen wird dieses Problem durch sogenantes Hop-by-Hop-AC per Call gelöst. Eine Übertragung dieser Lösung auf IP-Netze wird heute von den Fachleuten als nicht durchführbar eingeschätzt, zumindest nicht für große Netze.

Zur Zeit wird weltweit intensiv an Lösungen zum Ressourenmanagement für DiffServ-Netz gearbeitet. Dabei wird gemäß dem DiffServ-Grundgedanken nach Lösungen gesucht, um die Ressourcen im Netzinneren mit wenig Aufwand effizient auf aggregierte Verkehrsströme aufzuteilen.

In dem Aufsatz "Adaptive Resource Control for QoS Using an IP-based Layered Architecture", Martin Winter (Editor), EU-Deliverable IST-1999-10077-WP1.2-SAG-1201-PU-0/bO, June 2000, wird ein Konzept vorgeschlagen, dass mit Hilfe sogenannter Resource-Pools eine dynamische Ressourcenverteilung in IP-Netze einführt.

In "An Adaptive Algorithem for Resource Management in a Differentiated Service Network", E. Nikolouzou, G. Politis, P. Sampatakos, I.S.Venieris, National Technical University of Athens 2000, wird ein zugehöriges Verfahren beschrieben, das die eigentliche Ressourcenverteilung vornimmt. Dieses Verfahren hat sich in Simulationen jedoch als schwer steuerbar und nicht robust gegenüber Überlast herausgestellt. Das eigentliche Ziel einer automatischen Ressourcenverteilung wird damit nicht erreicht, da wegen der Empfindlichkeit der Steuerparameter gegenüber der Verkehrslast der Administrator das Verfahren ständig beobachten und die Parameter sorgsam einstellen muss.

Die Aufgabe der vorliegenden Erfindung besteht daher darin, eine Möglichkeit zu schaffen, dass verfügbare Ressourcen auf eine Menge konkurrierender Verkehrsströme aufgeteilt werden und diese Aufteilung dynamisch den jeweils aktuellen Bedingungen angepasst wird.

Gemäß der vorliegenden Erfindung wird diese Aufgabe durch ein Verfahren zur dynamischen Regelung einer Ressourcenaufteilung auf eine Mehrzahl von um diese Ressourcen konkurrierende Datenströme in einem Kommunikationsnetz gelöst, wobei die aufzuteilenden Ressourcen in einem Ressourcen-Pool bereitgestellt werden, aus dem für jeden konkurrierenden Datenstrom ein Ressourcen-Anteil entnommen und diesem Datenstrom zugeordnet wird, wobei

- eine dynamische Anpassung des Ressourcenbedarfs für einen Datenstrom erfolgt, indem bei gesteigertem Ressourcenbedarf sofern möglich ein entsprechend größerer Ressourcenanteil zugewiesen wird oder nicht mehr benötigte Ressourcen an den Ressourcen-Pool zurückgegeben werden, wozu

- ein zeitlicher Verlauf des Ressourcenbedarfs des Datenstroms ermittelt wird und mit einem vorgegebenen Schwellwert vergleichen wird, wobei
- sobald der Ressourcenbedarf den Schwellwert erreicht oder überschreitet,
- der zugeordnete Ressourcen-Anteil bei noch vorhandenen weiteren Ressourcen im Ressourcen-Pool erhöht wird, oder
- andernfalls erst nach Ablauf einer vorgegebenen Zeitspanne erneut geprüft wird, ob der Ressourcenbedarf nach wie vor oder wieder den Schwellwert erreicht oder überschreitet und ob wieder Ressourcen im Ressourcen-Pool zur Vergabe bereitstehen.

Die Ressourcen müssen dabei nicht physikalisch in einem Ressourcen-Pool bereitgestellt, daraus entnommen oder dahin zurückgegeben werden. Das ist nur die Sicht der Ressourcen-Verwaltung. Der Ressourcen-Pool dient der Verwaltung der von allen Konkurrenten gemeinsam genutzten Ressourcen.

Eine Reduzierung von Ressourcen erfolgt gemäß der vorliegenden Erfindung, indem

- ein nicht mehr benötigter Ressourcen-Anteil an den Ressourcen-Pool zurückgegeben wird, wenn
- dieser für eine vorgegebene Zeitspanne nicht benötigt wurde und wenn
- der Ressourcen-Pool nicht mindestens bis zu einem vorgegebenen Schwellwert gefüllt ist.

Dabei hat es sich als günstig erwiesen, wenn für den Fall, dass der Ressourcen-Pool mindestens bis zu dem vorgegebenen zweiten Schwellwert gefüllt ist, zunächst erneut geprüft wird, ob der zurückzugebende Ressourcen-Anteil für eine weitere zweite Zeitspanne der vorgegebenen Länge nicht benötigt wird.

Die oben stehenden Maßnahmen der Erfindung können vorzugsweise auch kombiniert werden.

Für eine Vergabe von freien Ressourcen hat es sich weiter als vorteilhaft herausgestellt, wenn ein nicht mehr benötigter Ressourcen-Anteil an den Ressourcen-Pool zurückgegeben wird, wenn der Ressourcenbedarf einen vorgegebenen unteren Schwellwert erreicht oder unterschreitet.

Dies kann weiter verbessert werden, indem der untere Schwellwert automatisch an den Ressourcenbedarf angepasst wird, wobei

- dieser untere Schwellwert verkleinert wird, wenn Ressourcen häufiger als notwendig in den Ressourcen-Pool zurückgegeben werden, oder
- dieser untere Schwellwert vergrößert wird, wenn in einer dritten vorgegebenen Zeitspanne kein Ressourcen-Anteil in den Ressourcen-Pool zurückgegeben wurde.

In vielen Fällen empfiehlt es sich besonders, dass der erste Schwellwert nahe dem aktuell zugewiesenen Ressourcenanteil vorgegeben wird.

Um lokale Synchronisationen der Ressourcenanpassung zu vermeiden, wird gemäß der vorliegenden Erfindung weiter vorgeschlagen, dass die erste Zeitspanne und/oder die zweite Zeitspanne und/oder die dritte Zeitspanne ständig durch Addition oder Subtraktion von Zufallswerten, insbesondere von kleinen Zufallswerten, variiert wird.

Ferner wird die Aufgabe der Erfindung auch durch eine korrespondierende Vorrichtung, insbesondere ein Ressourcen-Management-System, mit den folgenden Merkmalen gelöst:

- einem Ressourcen-Pool zur Bereitstellung von aufzuteilenden Ressourcen, aus dem für jeden konkurrierenden Datenstrom ein Ressourcen-Anteil entnehmbar und diesem Datenstrom zuordbar ist, wobei
- ein Mittel zur dynamischen Anpassung des Ressourcenbedarfs für einen Datenstrom vorgesehen ist, mit dem bei gesteigertem Ressourcenbedarf sofern möglich ein entsprechend größerer Ressourcenanteil zuweisbar ist oder nicht mehr benötigte Ressourcen an den Ressourcen-Pool zurückgebbar sind, wozu
- ein zeitlicher Verlauf des Ressourcenbedarfs des Datenstroms ermittelt wird und mit einem vorgegebenen Schwellwert vergleichen wird, wobei
- sobald der Ressourcenbedarf den Schwellwert erreicht oder überschreitet,
- der zugeordnete Ressourcen-Anteil bei noch vorhandenen weiteren Ressourcen im Ressourcen-Pool erhöht wird, oder
- andernfalls erst nach Ablauf einer vorgegebenen Zeitspanne erneut geprüft wird, ob der Ressourcenbedarf nach wie vor oder wieder den Schwellwert erreicht oder überschreitet und ob wieder Ressourcen im Ressourcen-Pool zur Vergabe bereitstehen.

Das Mittel zur dynamischen Anpassung des Ressourcenbedarfs für einen Datenstrom kann weiter dahingehend ausgestaltet sind, dass bei gesteigertem Ressourcenbedarf - sofern möglich

- ein entsprechend größerer Ressourcenanteil zuweisbar ist oder nicht mehr benötigte Ressourcen an den Ressourcen-Pool zurückgebbar sind, wobei
- ein nicht mehr benötigter Ressourcen-Anteil an den Ressourcen-Pool zurückgegeben wird, wenn
- dieser für eine vorgegebene Zeitspanne nicht benötigt wurde und wenn
- der Ressourcen-Pool nicht mindestens bis zu einem vorgegebenen Schwellwert gefüllt ist.

Weiter hat es sich als vorteilhaft herausgestellt, wenn durch das Mittel zur dynamischen Anpassung des Ressourcenbedarfs für den Fall, dass der Ressourcen-Pool mindestens bis zu dem vorgegebenen zweiten Schwellwert gefüllt ist, zunächst erneut geprüft wird, ob der zurückzugebende Ressourcen-Anteil für eine weitere zweite Zeitspanne der vorgegebenen Länge nicht benötigt wird.

Nach einer weiteren vorteilhaften Weiterbildung der erfindungsgemäßen Vorrichtung ist durch das Mittel zur dynamischen Anpassung des Ressourcenbedarfs ein nicht mehr benötigter Ressourcen-Anteil (RS) an den Ressourcen-Pool (RP) zurückgebbar, wenn der Ressourcenbedarf einen vorgegebenen unteren Schwellwert erreicht oder unterschreitet.

Dabei hat es sich als günstig erwiesen, wenn durch das Mittel zur dynamischen Anpassung des Ressourcenbedarfs der untere Schwellwert automatisch an den Ressourcenbedarf anpassbar ist, indem

- dieser untere Schwellwert verkleinerbar ist, wenn Ressourcen häufiger als notwendig in den Ressourcen-Pool zurückgegeben werden, oder
- dieser untere Schwellwert vergrößerbar ist, wenn in einer dritten vorgegebenen Zeitspanne kein Ressourcen-Anteil in den Ressourcen-Pool zurückgegeben wurde.

Durch die beschriebenen erfindungsgemäßen Maßnahmen wird die Ressourcennutzung optimiert und eine aufwendige und schwer zu beherrschende manuelle Regelung überflüssig. Netzauslastung und Übertragungsqualität werden dadurch optimiert.

Ein wesentlicher Aspekt der Erfindung liegt dabei in der Art wie die Messwerte ausgewertet und Aktionen zur Veränderung der Ressourcenzuteilung abgeleitet werden:

- die Beschränkung der Rückgabe nicht benötigter Ressourcen in den RP,
- die Verwendung von Zeitspannen um unnötige Aktivität zu bremsen,
- die Art und Weise, wie festgestellt wird, ob Ressourcen zurückgegeben werden sollen,
- die Bestimmung des Ressourcenanteils, der in den Pool zurückgegeben werden soll.

Weitere Vorteile und Details zur Realisierung der vorliegenden Erfindung ergeben sich anhand der im Folgenden beschriebenen vorteilhaften Ausführungsbeispiele und in Verbindung mit den Figuren. Es zeigt jeweils in Prinzipdarstellung:

FIG 1    einen Ausschnitt aus einem größeren IP-Netz, das verschiedene Transportdienste mit unterschiedlicher Dienstgüte (Quality of Service QoS) unterstützt.

FIG 2    ein Beispiel für die Aktivität eines Leaky-Share's in einem Ressourcen-Management-System (resource share manager RSM) anhand der Verarbeitung von einem AC-Request,

FIG 3    ein Beispiel für die Aktivität eines Leaky-Share's in einem Ressourcen-Management-System (resource share manager RSM) anhand der Verarbeitung von einem AC-Release,

FIG 4    ein Beispiel für die Aktivität eines Leaky-Share's in einem Ressourcen-Management-System (resource share manager RSM) anhand eines Aufrufs der Methode AC-Release, wenn ein aktivierter Release-Timer abläuft,

FIG 5    eine Reaktion eines Ressourcen-Management-Systems RSM auf einen AC-Request; überschreitet der Anteil genutzter Ressourcen den Schwellwerte $w_h$ werden weitere Ressourcen vom RP angefordert,

FIG 6    eine Verarbeitung von einem Resource-Request in einem Ressourcen-Pool-Manager (resource pool manager RPM),

FIG 7    eine Verarbeitung von einem Resource-Release in einem Ressourcen-Pool-Manager (resource pool manager RPM),

FIG 8    eine Reaktion eines Ressourcen-Management-Systems RSM auf einen AC-Release,

FIG 9    ein Ausführungsbeispiel für einen Retry-Filter anhand der Verarbeitung eines AC-Requests im Ressourcen-Management-System RSM,

FIG 10   ein Beispiel für die Aktivität des Adaptive-Watermark-Verfahrens in einem Ressourcen-Management-System RSM anhand einer Verarbeitung von einem AC-Request,

FIG 11   ein Ausführungsbeispiel für einen Adaptive-Retry-Filter anhand der Verarbeitung eines AC-Requests im Ressourcen-Management-System RSM,

FIG 12    ein Beispiel für die Aktivität eines Adaptive-Leaky-Share's in einem Ressourcen-Management-System RSM anhand der Verarbeitung von einem AC-Request,

FIG 13    anhand der Verarbeitung von einem AC-Release für die Aktivität eines Adaptive-Leaky-Share's,

FIG 14    einen Aufruf der Methode AC-Release für die Aktivität eines Adaptive-Leaky-Share's, wenn ein aktivierter Release-Timer abläuft und

FIG 15    eine Verarbeitung eines timeouts eines Release-Timers im RSM.

Für die einzelnen Ausführungsbeispiele werden im weiteren die voranstehend eingeführten englischsprachigen prägnanteren Begriffe den einzelnen Ausführungsformen der Erfindung wie folgt zugeordnet:

| Name | Ausführungsform |
|---|---|
| Leaky Share | FIG 2 + FIG 3 + FIG 4 |
| Adaptive Leaky Share | FIG 12 + FIG 13 + FIG 14 |
| Retry Filter | FIG 9 |
| Adaptive Retry Filter | FIG 11 |

Dabei lassen sich die Ausführungsformen folgendermaßen unterteilen:

| Verfahren zur dynamischen Regelung der Ressourcenaufteilung in Kommunikationsnetzen | Leaky Share + Retry Filter |
|---|---|
| Verfahren zur dynamischen Regelung der Ressourcenaufteilung in Kommunikationsnetzen mit adaptiven Schwellwerten | Adaptive Watermark + Retry Filter oder Adaptive Watermark + Adaptive Retry Filter |
| Verfahren zur dynamischen Regelung der Ressourcenaufteilung in Kommunikationsnetzen mit Hilfe dynamischer Freigaberate | Adaptive Leaky Share + Adaptive Retry Filter |

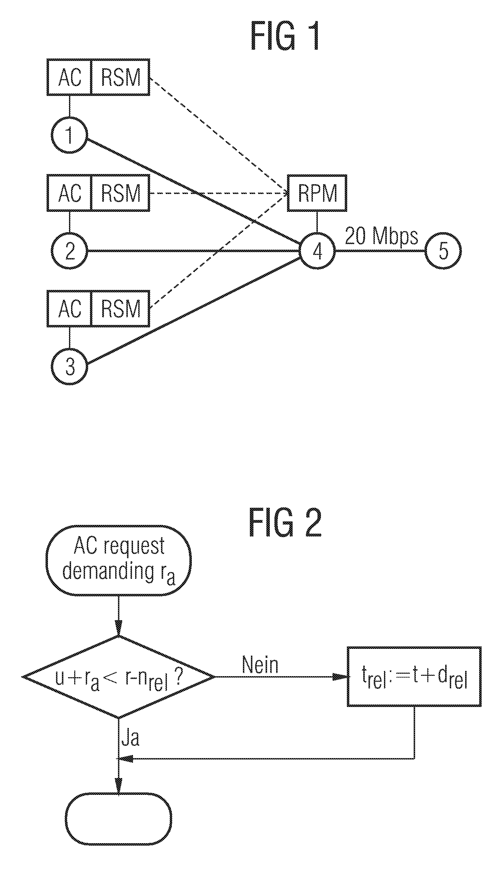

Die Darstellung gemäß FIG 1 zeigt einen Ausschnitt aus einem größeren IP-Netz mit Netzwerkknoten 1 bis 5, das verschiedene Transportdienste (mit unterschiedlicher QoS) unterstützt. Für einen bestimmten Transportdienst sind dort 20 Mbps der Verbindung von Knoten 4 nach 5 reserviert. Verkehrsströme bzw. Datenströme, die diese Ressourcen verwenden wollen, werden von einer jeweiligen den Knoten 1, 2 und 3 zugeordneten Zugriffssteuerung oder Admission-Control AC kontrolliert. Jedes AC-Modul wird um einen Ressourcen-Manager RSM (resource share manager) ergänzt.

Jeder RSM steuert die Ressourcenzuteilung für den von ihm vertretenen Verkehrsstrom, der vom zugehörigen AC kontrolliert wird. Über die Schnittstelle zum AC, teilt der RSM dem AC die verfügbaren Ressourcen mit und erhält umgekehrt die zur Ressourcensteuerung notwendigen Messwerte. Bei Bedarf holt sich ein RSM weitere Ressourcen aus dem gemeinsamen Ressourcen-Pool RP (resource pool).

Dazu wird in diesem Ausführungsbeispiel dem Knoten 4 ein Ressourcen-Pool-Manager RPM (resource pool manager) zugeordnet, der den gemeinsamen Ressourcen-Pool RP verwaltet. Der RP enthält die verfügbaren Ressourcen. Zu Beginn enthält der RP die zu teilenden 20 Mbps (verfügbare Ressourcen auf der Verbindung von Knoten 4 nach 5) und der Ressourcenanteil jedes RSM beträgt 0 Mbps.

Während des Netzbetriebs holen sich die RSM Ressourcen aus dem gemeinsamen RP und geben nicht mehr benötigte Ressourcen dorthin zurück.

Zur dynamischen Regelung der Ressourcenaufteilung gemäß der Erfindung benötigt jedes der beiden Module RSM und RPM nun je ein Verfahren für die Zuteilung und ein Verfahren für die Freigabe von Ressourcen:

RSM-release: Ein Verfahren, das entscheidet ob und wieviele Ressourcen an den RP zurückgegeben werden. Gibt bei Bedarf über die Funktion RPM-release Ressourcen an den RP zurück (z.B. ‚Leaky Share', oder Adaptive Leaky Share').

RSM-request: Ein Verfahren, das entscheidet ob und wieviele zusätzliche Ressourcen aus dem RP angefordert werden. Holt bei Bedarf über die Funktion RPM-request Ressourcen aus dem RP (z.B. ‚Retry Filter' oder ‚Adaptive Retry Filter).

RPM-release: Ein Verfahren, das auf Anfrage nicht mehr benötigte Ressourcen zurücknimmt und in den verwalteten RP stellt.

RPM-request: Ein Verfahren, das auf Anfrage entscheidet ob und wieviele Ressourcen aus dem verwalteten RP einem RSM zugeteilt werden.

Gemäß einer ersten Ausführungsform eines Verfahrens zur dynamischen Regelung der Ressourcenaufteilung in Kommunikationsnetzen gemäß der Erfindung, dem sog. ‚Leaky Share', beinhaltet der Resource-Pool (RP) zunächst die zu teilenden Ressourcen (z. B. ein bestimmter Anteil der Kapazität einer Verbindungsleitung wie zwischen den beiden Knoten 4 und 5). Aus diesem RP wird für jeden der um den Pool konkurrierenden Verkehrsströme, RPS (resource pool shareholder) genannt, ein bestimmter Anteil, RS (resource share) genannt, entnommen und ihm zugeordnet.

Anhand von Messdaten werden, wie im folgenden beschrieben, bei Bedarf dynamisch Anpassungen vorgenommen, indem die beteiligten RPS nicht benötigte Ressourcen an den gemeinsamen RP zurückgeben, bzw. ihnen größere Anteile aus dem gemeinsamen RP zugewiesen werden.

Für jeden RPS wird der zeitliche Verlauf des Ressourcenbedarfs gemessen (z.B. anhand der Bandbreiten der AC-Requests und AC-Releases). Erreicht der Ressourcenbedarf einen vorgegebenen Schwellwert nahe dem zugewiesenen RS, dann wird sein Anteil erhöht, insofern noch nicht zugewiesene Ressourcen im RP vorhanden sind. Ist eine Erhöhung des RSs nicht möglich, dann wird erst nach Ablauf einer vorgegebenen Zeitspanne erneut geprüft ob eine Erhöhung notwendig (gemessener Bedarf hat Schwellwert erreicht) und möglich ist.

Umgekehrt wird ein bestimmter Teil eines RSs an den gemeinsamen RP zurückgegeben, wenn dieser für eine vorgegebene Zeitspanne nicht benötigt wurde. Ist der gemeinsame RP jedoch mindestens bis zu einem vorgegebenen Schwellwert gefüllt, dann wird die Rückgabe nicht vorgenommen und zunächst erneut geprüft ob der zurückzugebende Anteil für eine weitere Zeitspanne der vorgegebenen Länge nicht benötigt wird.

Im Folgenden werden die Operationen für das voranstehend beschriebene Verfahren gemäß der Erfindung anhand von einem Pseudo-Code einer Programmiersprache näher dargestellt. Dazu werden die folgenden Parameter verwendet.

| Parameter RSM | |
| --- | --- |
| r | zugeordnete Ressourcen |
| u | aktueller Ressourcenbedarf |
| $r_a$ | Ressourcenbedarf des betrachteten AC-Requests |
| $n_{rel}$ | Blockgröße für Resource-Release |
| $d_{rel}$ | Delay für Resource-Release in Sekunden |
| $d_{reg}$ | Delay für Resource-Requests |
| $t_{rel}$ | nächst möglicher Zeitpunkt für ein Resource-Release |
| $t_{reg}$ | nächst möglicher Zeitpunkt für ein Resource-Request |
| t | aktuelle Zeit |
| $w_h$ | Schwellwert für Resource-Request |
| $w_l$ | Schwellwert für Resource-Releases |
| $n_{reg}$ | Blockgröße für Resource-Request |

| Parameter RPM | |
| --- | --- |
| R | Füllstand Resource-Pool |
| $R_{max}$ | Schwellwert für Ressourcenrücknahme |
| $n_{reg}$ | Blockgröße für Resource-Requests |
| $r_a$ | Ressourcenbedarf des betrachteten Resource-Requests bzw. Resource-Releases |

Die jeweils in einem RSM und einem RPM ablaufenden, nachstehend beschriebenen Aktionen sind auch in FIG 2 bis FIG 7 wie folgt in Form von jeweiligen Ablaufdiagrammen dargestellt, insbesondere im Hinblick auf eine softwaretechnische Realisierung der Erfindung.

| Aktionen | | |
|---|---|---|
| RSM | release | FIG 2, FIG 3, FIG 4 |
| | request | FIG 5 |
| RPM | request | FIG 6 |
| | release | FIG 7 |

Verarbeitung im RSM-Modul:

Mit jedem AC-Request teilt das AC-Modul dem RSM die zusätzlich benötigte Bandbreite $r_a$ mit und löst folgende Verarbeitung aus:

```
if( u + rₐ ≥ wₕr AND t_req ≤ t ) then request additional re-

            sources of size of n_req·rₐ from RPM;
            if( returned bandwidth b = 0 )
            then t_req = t + d_req;
            else r → r + b;
```

Mit jedem akzeptierten AC-Request teilt ein AC-Modul dem RSM die zusätzlich benötigte Bandbreite $r_a$ mit und löst folgende Verarbeitung aus:

```
            u → u + rₐ;
            if( u > r − n_rel ) then t_rel → t_rel + d_rel;
```

Mit jedem AC-Release teilt das AC-Modul dem RSM die nicht mehr benötigte Bandbreite $r_a$ mit und löst folgende Verarbeitung aus:

```
u → u − rₐ;
if( u ≤ r − n_rel AND t_rel ≤ t )
then
     offer RPM to give resources of size of n_rel back to RP;
     if( release was accepted ) then r → r − n_rel;
     t_rel → t_rel + d_rel;
fi;
if( u = 0 ) then activate a timer that triggers next resource
release after d_rel;
```

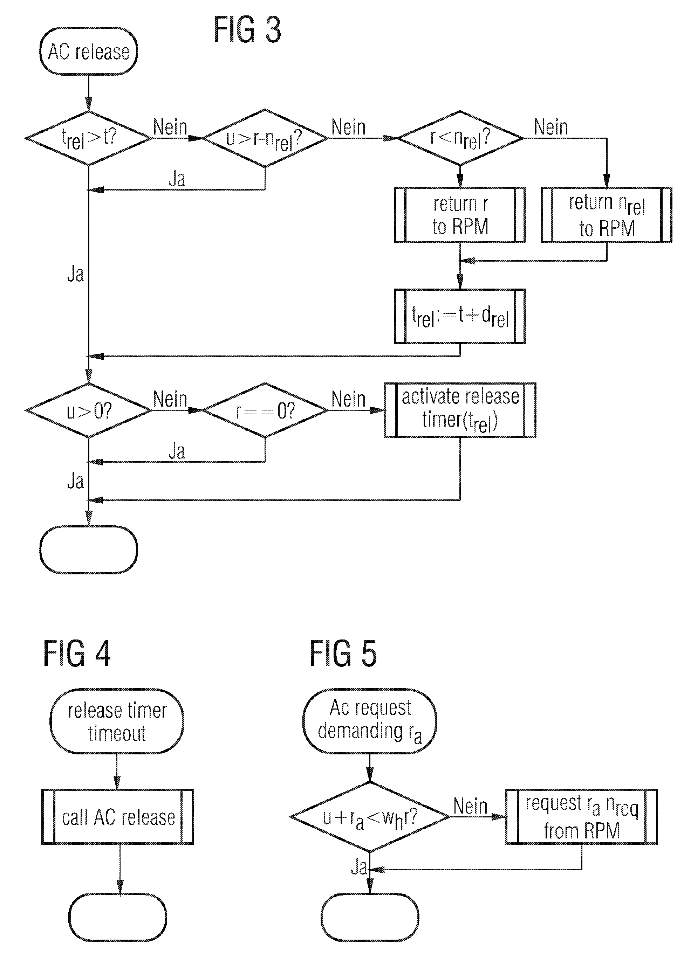

Die Figuren FIG 2 bis FIG 4 zeigen entsprechende Schritte für eine RSM in Form von Ablaufdiagrammen mit den oben angeführten Parametern. Die FIG 2 zeigt die Aktivität eines Leaky-Share's in einem Ressourcen-Management-System RSM anhand der Verarbeitung von einem AC-Request, die FIG 3 die Aktivität eines Leaky-Share's in einem RSM anhand der Verarbeitung von einem AC-Release, die FIG 4 schließlich die Aktivität eines Leaky-Share's in einem RSM anhand eines Aufrufs der Methode AC-Release, wenn ein aktivierter Release-Timer abläuft.

Die Darstellung in FIG 5 zeigt eine Reaktion eines Ressourcen-Management-Systems RSM auf einen AC-Request; überschreitet der Anteil genutzter Ressourcen den Schwellwerte $w_h$ werden weitere Ressourcen vom RP angefordert.

Verarbeitung im RPM-Modul:

Für jeden Resource-Request mit zusätzlich benötigter Bandbreite $r_a$:

$$R \rightarrow R - \min(n_{req}r_a, R);$$

return size of bandwidth assigned additionally, which is min $(n_{req}r_a, R)$;
Für jeden Resource-Release mit offerierter Bandbreite $r_b$:

```
if( R ≥ Rmax )
then refuse release;
else accept release and set R → R + rb;
```

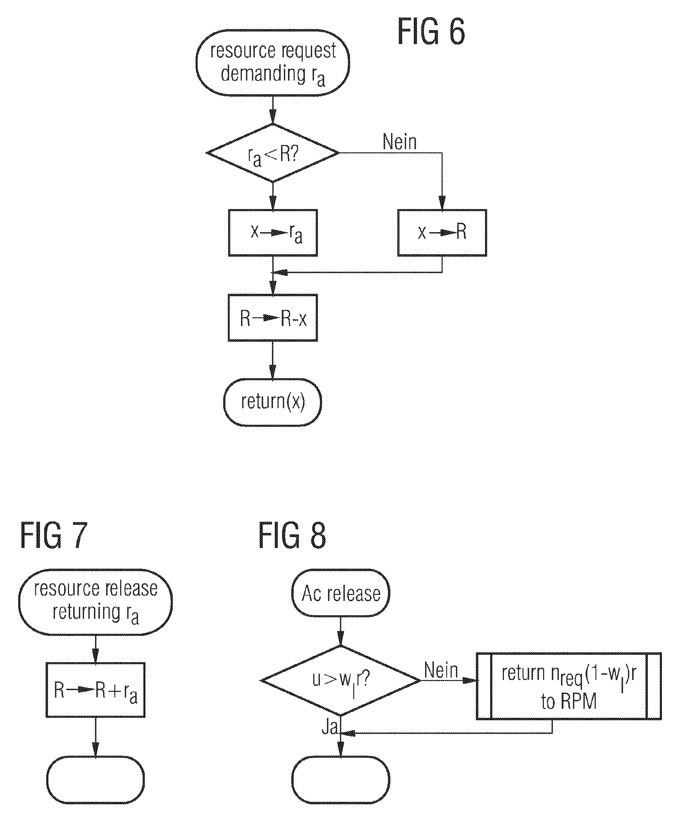

Die FIG 6 zeigt eine entsprechende Verarbeitung von einem Resource-Request in einem Ressourcen-Pool-Manager RPM, die FIG 7 eine Verarbeitung von einem Resource-Release in einem Ressourcen-Pool-Manager RPM.
Eine Variante für ein RSM-request besteht in der Verwendung eines sogenannten ‚Retry Filters'. Unterschiede bestehen lediglich in der Funktion des RSM, die Aktionen des RPM bleiben unverändert. Die zugehörigen Aktionen sind in FIG 2 bis FIG 4 und FIG 9 wie folgt in Form von jeweiligen Ablaufdiagrammen dargestellt.

| Aktionen | | |
|---|---|---|
| RSM | release | FIG 2, FIG 3, FIG 4 |
| | request | FIG 9 |
| RPM | request | FIG 6 |
| | release | FIG 7 |

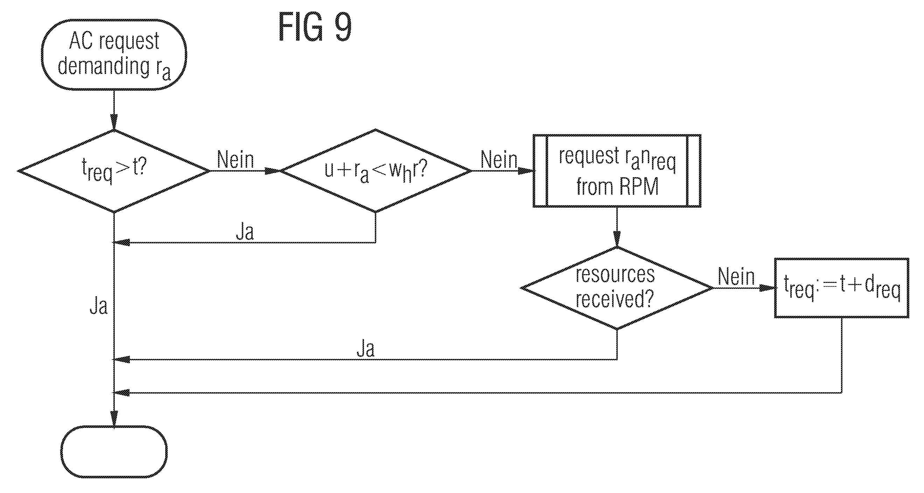

Die Darstellung gemäß der FIG 8 zeigt eine entsprechende Reaktion eines Ressourcen-Management-Systems RSM auf einen AC-Release. Unterschreitet der Anteil genutzter Ressourcen den Schwellwert $w_l$ wird ein Teil der nicht benötigten Ressourcen an den RP zurückgegeben. Die FIG 9 schließlich zeigt die Verarbeitung eines AC-Requests im Ressourcen-Management-System RSM für einen Retry-Filter.
Um Synchronisationen zu vermeiden, können die verwendeten Zeitspannen durch Addition kleiner zufälliger Werte differenziert werden.
Eine Alternative Ausführungsform der Erfindung basiert auf einer dynamischen Regelung der Ressourcenaufteilung in Kommunikationsnetzen mit adaptiven Schwellwerten.
Für die zu teilenden Ressourcen, z. B. ein bestimmter Anteil der Kapazität einer Verbindungsleitung zwischen den Netzknoten 4 und 5, wird ebenfalls ein Resource-Pool (RP) eingerichtet. Daraus können RSM (resource share manager) für die von ihnen vertretenen Verkehrsströme bei Bedarf Ressourcen entnehmen und umgekehrt nicht mehr benötigte Ressourcen dorthin zurückgeben. Jeder RSM überprüft wiederum laufend anhand von Messdaten, ob einerseits mit den zugeteilten Ressourcen der Bedarf gedeckt werden kann und ob andererseits auf einen Teil der zugeteilten Ressourcen verzichtet werden kann.
Sobald der gemessene Bandbreitenbedarf einen bestimmten (oberen) Schwellwert erreicht oder übersteigt, holt der RSM zusätzliche Ressourcen aus dem gemeinsamen RP, sofern dieser nicht leer ist. Ist eine Ressourcenerhöhung wegen eines leeren RPs nicht möglich, kann ein weitere Nachfrage für eine bestimmte Zeit gesperrt werden, um unnötige Last zu vermeiden.

Sobald der gemessene Bandbreitenbedarf einen zweiten (unteren) Schwellwert erreicht oder unterschreitet, gibt der RSM einen Teil der nicht benötigten Ressourcen in den gemeinsamen RP zurück. Gemäß der Erfindung passt der RSM diesen Schwellwert wie folgt automatisch an die Verkehrslast an:

Stellt ein RSM fest, dass er Ressourcen zu häufig zurückgibt, dann wird der Schwellwert verkleinert. Stellt ein RSM fest, dass er in einem bestimmten Zeitintervall keine Ressourcen zurückgibt, dann wird der Schwellwert erhöht.

Die wesentliche Weiterbildung liegt hierbei in der Adaption des Schwellwertes für die Rückgabe von Ressourcen und im Bremsen der Aktivität nach einem erfolglosen Versuch, zusätzliche Ressourcen aus dem gemeinsamen RP zu holen.

Im Folgenden werden wiederum die Operationen für das voranstehend beschriebene Verfahren mit adaptiven Schwellwerten gemäß der Erfindung in Form von jeweiligen Ablaufdiagrammen näher dargestellt. Dazu werden die folgenden erweiterten Parameter verwendet.

| Parameter RSM | |
|---|---|
| $r$ | zugeordnete Ressourcen |
| $u$ | aktueller Ressourcenbedarf |
| $r_a$ | Ressourcenbedarf des betrachteten AC-Requests |
| $w_h$ | Schwellwert für Resource-Request |
| $w_l$ | Schwellwert für Resource-Releases |
| $n_{rel}$ | Blockgröße für Resource-Release |
| $i_{rel}$ | Länge des aktuellen Messintervalls (für Adaption von $w_l$) in Anzahl AC-Releases |
| $i_{dec}$ | Anzahl Resource-Releases im aktuellen Messintervall |
| $m_{dec}$ | Maximalwert für Resource-Releases in einem Messintervall |
| $l_{rel}$ | Dauer eines Messintervalls in Anzahl AC-Releases |
| $a_{inc}$ | Schrittweite für Erhöhungen von $w_l$ |
| $a_{dec}$ | Schrittweite für Verkleinerungen von $w_l$ |
| $i_{reg}$ | Anzahl AC-Requests |
| $n_{reg}$ | Blockgröße für Resource-Request |

| Parameter RPM | |
|---|---|
| $R$ | Füllstand Resource-Pool |
| $R_{max}$ | Schwellwert für Ressourcenrücknahme |
| $n_{reg}$ | Blockgröße für Resource-Requests |
| $r_a$ | Ressourcenbedarf des betrachteten Resource-Requests bzw. Resource-Releases |

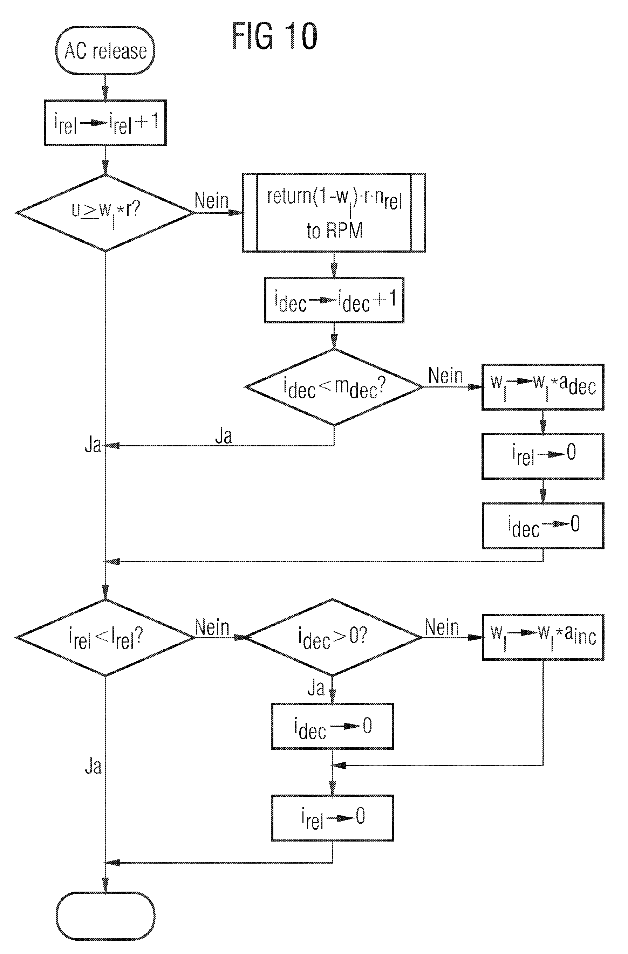

Die jeweils in einem RSM und einem RPM ablaufenden Aktionen bei adaptiven Schwellwerten sind auch in FIG 5 bis FIG 7 sowie in FIG 10 wie folgt in Form von jeweiligen Ablaufdiagrammen dargestellt.

| Aktionen | | |
|---|---|---|
| RSM | release | FIG 10 |
| | request | FIG 5 |
| RPM | request | FIG 6 |
| | release | FIG 7 |

Die Darstellung gemäß der FIG 10 zeigt dabei die wesentlichen Schritte für die Aktivität des Adaptive-Watermark-Verfahrens in einem Ressourcen-Management-System RSM anhand einer Verarbeitung von einem AC-Request.

Eine Variante für ein RSM-request hierzu besteht in der Verwendung eines sogenannten ‚Adaptive Retry Filters'. Unterschiede bestehen wiederum nur in der Funktion des RSM, die Aktionen des RPM bleiben unverändert. Die zugehörigen Aktionen des RSM sind in FIG 2 bis FIG 4 und FIG 11 wie folgt in Form von jeweiligen Ablaufdiagrammen dargestellt.

| Aktionen | | |
|---|---|---|
| RSM | release | FIG 2, FIG 3, FIG 4 |
| | request | FIG 11 |
| RPM | request | FIG 6 |
| | release | FIG 7 |

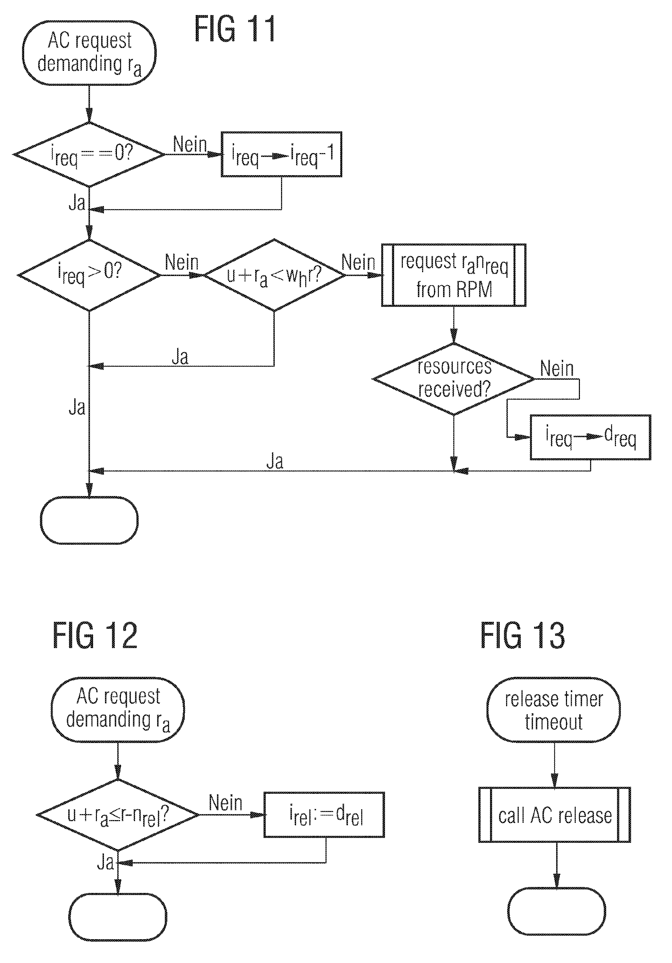

Die FIG 2 bis FIG 4 wurden bereits dargestellt. Die Darstellung gemäß der FIG 11 zeigt die Verarbeitung eines AC-Requests im Ressourcen-Management-System RSM für einen Adaptive-Retry-Filter.

Eine weitere vorteilhafte Alternative gemäß der vorliegenden Erfindung basiert auf einer dynamischen Regelung der Ressourcenaufteilung in Kommunikationsnetzen mit Hilfe einer dynamischen Freigaberate. Für die zu teilenden Ressourcen wird der bereits bekannte Resource-Pool (RP) eingerichtet. Daraus entnehmen RSM (resource share manager) für die von ihnen vertretenen Verkehrsströme bei Bedarf Ressourcen und geben umgekehrt nicht mehr benötigte Ressourcen wieder dorthin zurück. Jeder RSM überprüft laufend anhand von Messdaten, ob einerseits mit den zugeteilten Ressourcen der Bedarf gedeckt werden kann und ob andererseits auf einen Teil der zugeteilten Ressourcen verzichtet werden kann.

Stellt ein RSM fest, das mehr Ressourcen benötigt werden als ihm zu Verfügung stehen, z.B. dadurch dass der gemessene Bandbreitenbedarf einen Schwellwert erreicht oder übersteigt, dann holt er sich zusätzliche Ressourcen aus dem gemeinsamen RP, insofern dieser nicht leer ist. Ist eine Ressourcenerhöhung wegen eines leeren RPs nicht möglich, kann ein weitere Nachfrage für eine bestimmte Zeit gesperrt werden, um unnötige Last zu vermeiden.

Um festzustellen ob auf einen Teil der zugeteilten Ressourcen verzichtet werden kann, prüft der RSM gemäß der Erfindung laufend, ob ein bestimmter Ressourcenanteil für eine bestimmte Anzahl aufeinander folgender AC-Requests nicht benötigt wird. Nur dann wird dieser Ressourcenanteil zurückgegeben.

Ein wesentlicher Schritt liegt in der Vorgehensweise, nach der über die Freigabe von Ressourcen entschieden wird, und nach der die Aktivität nach einem erfolglosen Versuch, mehr Ressourcen aus dem gemeinsamen Ressourcen-Pool RP zu erhalten, gebremst wird:

(a) Wird für eine Sequenz unmittelbar aufeinander folgender AC-Requests mit einer bestimmten Länge ein bestimmter Ressourcenanteil nicht benötigt, dann wird dieser Anteil zurückgegeben. Nach jeder Rückgabe wird mit dem selben Verfahren erneut geprüft, ob ein weiterer Anteil zurückgegeben werden kann.

(b) Für den Fall, dass für eine bestimmte Zeitspanne keine AC-Requests eintreffen, z. B. die Zeitspanne in der die Prüfsequenz nach (a) zu erwarten wäre, wird wie in (a) ein bestimmter Ressourcenanteil zurückgegeben.

(c) Schlägt ein Versuch, zusätzliche Ressourcen aus dem gemeinsamen RP zu holen, fehl, dann werden weitere Versuche die Ressourcen zu erhöhen unterbunden, bis eine bestimmte Anzahl unmittelbar aufeinander folgender AC-Requests eingetroffen ist.

Im Folgenden werden wiederum die Operationen für das voranstehend beschriebene Verfahren mit dynamischer Freigaberate gemäß der Erfindung in Form von jeweiligen Ablaufdiagrammen näher dargestellt. Dazu werden die folgenden Parameter verwendet.

| Parameter RSM | |
|---|---|
| $r$ | zugeordnete Ressourcen |
| $u$ | aktueller Ressourcenbedarf |
| $r_a$ | Ressourcenbedarf des betrachteten AC-Requests |
| $n_{rel}$ | Blockgröße für Resource-Release |
| $d_{rel}$ | Delay für Resource-Release in Anzahl AC-Releases |

(fortgesetzt)

| Parameter RSM | |
|---|---|
| $i_{rel}$ | minimaler Delay bis zum nächsten Resource-Release in Anzahl AC-Releases |
| $w_h$ | Schwellwert für Resource-Request |
| $n_{reg}$ | Blockgröße für Resource-Request |

| Parameter RPM | |
|---|---|
| R | Füllstand Resource-Pool |
| $R_{max}$ | Schwellwert für Ressourcenrücknahme |
| $n_{reg}$ | Blockgröße für Resource-Requests |
| $r_a$ | Ressourcenbedarf des betrachteten Resource-Requests bzw. Resource-Releases |

Die jeweils in einem RSM und einem RPM ablaufenden Aktionen bei adaptiven Schwellwerten sind auch in FIG 5 bis FIG 7 sowie in FIG 12 bis FIG 14 wie folgt in Form von jeweiligen Ablaufdiagrammen dargestellt.

| Aktionen | | |
|---|---|---|
| RSM | release | FIG 12, FIG 13, FIG 14 |
| | request | FIG 5 |
| RPM | request | FIG 6 |
| | release | FIG 7 |

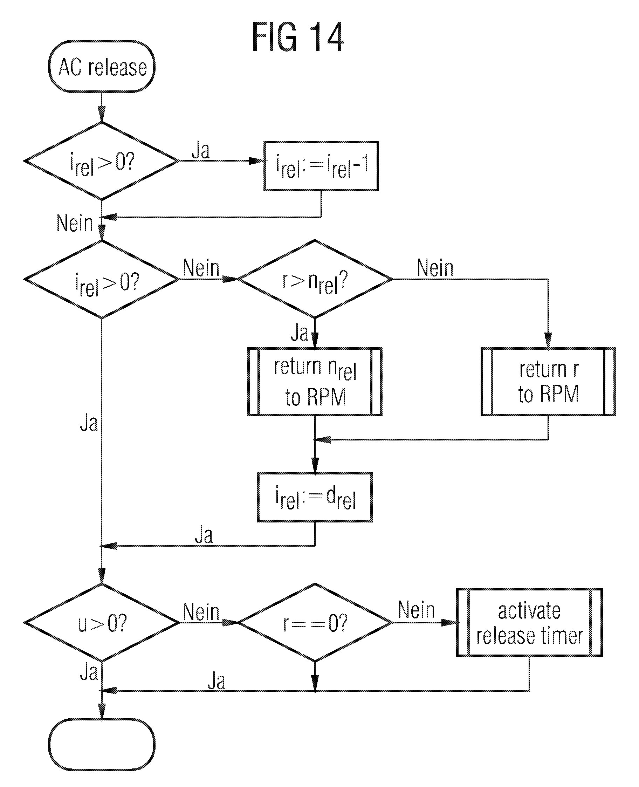

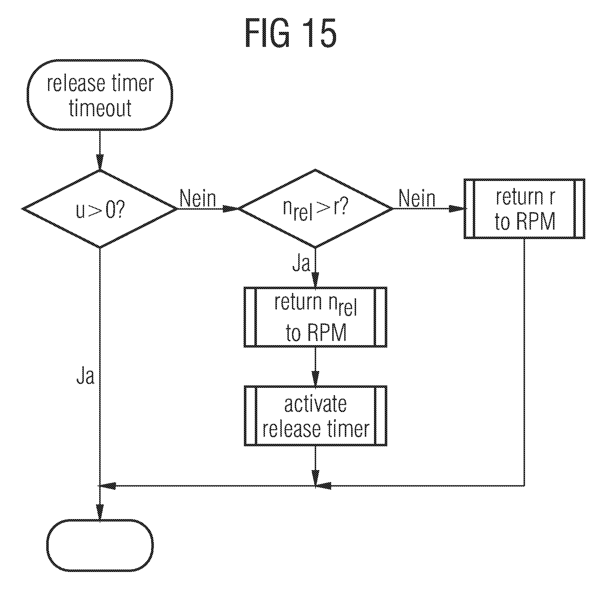

Die Darstellung gemäß der FIG 5 wurde bereits erlätert. Die FIG 12 zeigt nun ein Beispiel für die Aktivität eines Adaptive-Leaky-Share's in einem Ressourcen-Management-System RSM anhand der Verarbeitung von einem AC-Request. Die FIG 13 zeigt dies anhand der Verarbeitung von einem AC-Release für die Aktivität eines Adaptive-Leaky-Share's und die FIG 14 schließlich zeigt einen Aufruf der Methode AC-Release für die Aktivität eines Adaptive-Leaky-Share's, wenn ein aktivierter Release-Timer abläuft. Die FIG 15 schließlich verdeutlicht eine Alternative für die Verarbeitung eines timeouts eines solchen Release-Timers im RSM.

In Simulationen hat sich gezeigt, dass diese Verfahren gemäß der Erfindung zuverlässig arbeiten sowie robust und leicht zu steuern sind.

Im RSM kann jedes der voranstehend beschriebenen und in den Figuren gezeigten Verfahren für sich alleine angewendet werden. Jedes der Release-Verfahren kann theoretisch mit jedem der Request-Verfahren kombiniert werden: z.B. ‚Leaky Share' mit ‚Retry Filter' (vgl. obige Tabelle). Die Verarbeitung im RPM ist in allen Ausführungsbeispielen gleich.

**Patentansprüche**

1. Verfahren zur dynamischen Regelung einer Ressourcenaufteilung auf eine Mehrzahl von um diese Ressourcen konkurrierende Datenströme (RPS) in einem Kommunikationsnetz, wobei die aufzuteilenden Ressourcen in einem Ressourcen-Pool (RP) bereitgestellt werden, aus dem für jeden konkurrierenden Datenstrom (RPS) ein Ressourcen-Anteil (RS) entnommen und diesem Datenstrom zugeordnet wird, wobei

- eine dynamische Anpassung des Ressourcenbedarfs für einen Datenstrom erfolgt, indem bei gesteigertem Ressourcenbedarf sofern möglich ein entsprechend größerer Ressourcenanteil zugewiesen wird oder nicht mehr benötigte Ressourcen an den Ressourcen-Pool (RP) zurückgegeben werden, wozu
- ein zeitlicher Verlauf des Ressourcenbedarfs des Datenstroms (RPS) ermittelt wird und mit einem vorgegebenen Schwellwert verglichen wird, wobei
- sobald der Ressourcenbedarf den Schwellwert erreicht oder überschreitet,
- der zugeordnete Ressourcen-Anteil (RS) bei noch vorhandenen weiteren Ressourcen im Ressourcen-Pool (RP) erhöht wird, oder

- andernfalls erst nach Ablauf einer vorgegebenen Zeitspanne erneut geprüft wird, ob der Ressourcenbedarf nach wie vor oder wieder den Schwellwert erreicht oder überschreitet und ob wieder Ressourcen im Ressourcen-Pool (RP) zur Vergabe bereitstehen.

2. Verfahren zur dynamischen Regelung einer Ressourcenaufteilung auf eine Mehrzahl von um diese Ressourcen konkurrierende Datenströme (RPS) in einem Kommunikationsnetz, wobei die aufzuteilenden Ressourcen in einem Ressourcen-Pool (RP) bereitgestellt werden, aus dem für jeden konkurrierenden Datenstrom (RPS) ein Ressourcen-Anteil (RS) entnommen und diesem Datenstrom zugeordnet wird, wobei

- eine dynamische Anpassung des Ressourcenbedarfs für einen Datenstrom erfolgt, indem bei gesteigertem Ressourcenbedarf sofern möglich ein entsprechend größerer Ressourcenanteil zugewiesen wird oder nicht mehr benötigte Ressourcen an den Ressourcen-Pool (RP) zurückgegeben werden, wobei
- ein nicht mehr benötigter Ressourcen-Anteil (RS) an den Ressourcen-Pool (RP) zurückgegeben wird, wenn
- dieser (RS) für eine vorgegebene Zeitspanne nicht benötigt wurde und wenn
- der Ressourcen-Pool (RP) nicht mindestens bis zu einem vorgegebenen Schwellwert gefüllt ist.

3. Verfahren zur dynamischen Regelung einer Ressourcenaufteilung auf eine Mehrzahl von um diese Ressourcen konkurrierende Datenströme (RPS) in einem Kommunikationsnetz, wobei die aufzuteilenden Ressourcen in einem Ressourcen-Pool (RP) bereitgestellt werden, aus dem für jeden konkurrierenden Datenstrom (RPS) ein Ressourcen-Anteil (RS) entnommen und diesem Datenstrom zugeordnet wird, wobei

- eine dynamische Anpassung des Ressourcenbedarfs für einen Datenstrom erfolgt, indem bei gesteigertem Ressourcenbedarf sofern möglich ein entsprechend größerer Ressourcenanteil zugewiesen wird oder nicht mehr benötigte Ressourcen an den Ressourcen-Pool (RP) zurückgegeben werden, wozu
- ein zeitlicher Verlauf des Ressourcenbedarfs des Datenstroms (RPS) ermittelt wird und mit einem ersten vorgegebenen Schwellwert vergleichen wird, wobei
- sobald der Ressourcenbedarf den ersten Schwellwert erreicht oder überschreitet,
- der zugeordnete Ressourcen-Anteil (RS) bei noch vorhandenen weiteren Ressourcen im Ressourcen-Pool (RP) erhöht wird, oder
- andernfalls erst nach Ablauf einer ersten vorgegebenen Zeitspanne erneut geprüft wird, ob der Ressourcenbedarf nach wie vor oder wieder den ersten Schwellwert erreicht oder überschreitet und ob wieder Ressourcen im Ressourcen-Pool (RP) zur Vergabe bereitstehen, und wobei
- ein nicht mehr benötigter Ressourcen-Anteil (RS) an den Ressourcen-Pool (RP) zurückgegeben wird, wenn
- dieser (RS) für eine zweite vorgegebene Zeitspanne nicht benötigt wurde und wenn
- der Ressourcen-Pool (RP) nicht mindestens bis zu einem zweiten vorgegebenen Schwellwert gefüllt ist.

4. Verfahren zur dynamischen Regelung einer Ressourcenaufteilung auf eine Mehrzahl von um diese Ressourcen konkurrierende Datenströme (RPS) in einem Kommunikationsnetz nach Anspruch 2 oder 3, wobei für den Fall, dass der Ressourcen-Pool (RP) mindestens bis zu dem vorgegebenen zweiten Schwellwert gefüllt ist, zunächst erneut geprüft wird, ob der zurückzugebende Ressourcen-Anteil (RS) für eine weitere zweite Zeitspanne der vorgegebenen Länge nicht benötigt wird.

5. Verfahren zur dynamischen Regelung einer Ressourcenaufteilung auf eine Mehrzahl von um diese Ressourcen konkurrierende Datenströme (RPS) in einem Kommunikationsnetz nach Anspruch 1, wobei ein nicht mehr benötigter Ressourcen-Anteil (RS) an den Ressourcen-Pool (RP) zurückgegeben wird, wenn der Ressourcenbedarf einen vorgegebenen unteren Schwellwert erreicht oder unterschreitet.

6. Verfahren zur dynamischen Regelung einer Ressourcenaufteilung auf eine Mehrzahl von um diese Ressourcen konkurrierende Datenströme (RPS) in einem Kommunikationsnetz nach Anspruch 5, wobei der untere Schwellwert automatisch an den Ressourcenbedarf angepasst wird, indem

- dieser untere Schwellwert verkleinert wird, wenn Ressourcen häufiger als notwendig in den Ressourcen-Pool zurückgegeben werden, oder
- dieser untere Schwellwert vergrößert wird, wenn in einer dritten vorgegebenen Zeitspanne kein Ressourcen-Anteil in den Ressourcen-Pool zurückgegeben wurde.

7. Verfahren zur dynamischen Regelung einer Ressourcenaufteilung auf eine Mehrzahl von um diese Ressourcen konkurrierende Datenströme (RPS) in einem Kommunikationsnetz nach Anspruch 1, 3, 4, 5 oder 6, wobei der erste Schwellwert nahe dem aktuell zugewiesenen Ressourcenanteil vorgegeben wird.

8. Verfahren zur dynamischen Regelung einer Ressourcenaufteilung auf eine Mehrzahl von um diese Ressourcen konkurrierende Datenströme (RPS) in einem Kommunikationsnetz nach einem der vorangehenden Ansprüche, wobei die erste Zeitspanne und/oder die zweite Zeitspanne und/oder die dritte Zeitspanne ständig durch Addition oder Subtraktion von Zufallswerten, insbesondere von kleinen Zufallswerten, variiert wird.

9. Vorrichtung zur dynamischen Regelung einer Ressourcenaufteilung auf eine Mehrzahl von um diese Ressourcen konkurrierende Datenströme (RPS) in einem Kommunikationsnetz (1...5), mit

- einem Ressourcen-Pool (RP) zur Bereitstellung von aufzuteilenden Ressourcen, aus dem für jeden konkurrierenden Datenstrom (RPS) ein Ressourcen-Anteil (RS) entnehmbar und diesem Datenstrom zuordbar ist, wobei
- ein Mittel zur dynamischen Anpassung des Ressourcenbedarfs für einen Datenstrom vorgesehen ist, mit dem bei gesteigertem Ressourcenbedarf sofern möglich ein entsprechend größerer Ressourcenanteil zuweisbar ist oder nicht mehr benötigte Ressourcen an den Ressourcen-Pool (RP) zurückgebbar sind, wozu
- ein zeitlicher Verlauf des Ressourcenbedarfs des Datenstroms (RPS) ermittelt wird und mit einem vorgegebenen Schwellwert vergleichen wird, wobei
- sobald der Ressourcenbedarf den Schwellwert erreicht oder überschreitet,
- der zugeordnete Ressourcen-Anteil (RS) bei noch vorhandenen weiteren Ressourcen im Ressourcen-Pool (RP) erhöht wird, oder
- andernfalls erst nach Ablauf einer vorgegebenen Zeitspanne erneut geprüft wird, ob der Ressourcenbedarf nach wie vor oder wieder den Schwellwert erreicht oder überschreitet und ob wieder Ressourcen im Ressourcen-Pool (RP) zur Vergabe bereitstehen.

10. Vorrichtung zur dynamischen Regelung einer Ressourcenaufteilung auf eine Mehrzahl von um diese Ressourcen konkurrierende Datenströme (RPS) in einem Kommunikationsnetz (1...5), mit

- einem Ressourcen-Pool (RP) zur Bereitstellung von aufzuteilenden Ressourcen, aus dem für jeden konkurrierenden Datenstrom (RPS) ein Ressourcen-Anteil (RS) entnehmbar und diesem Datenstrom zuordbar ist, wobei
- ein Mittel zur dynamischen Anpassung des Ressourcenbedarfs für einen Datenstrom vorgesehen ist, mit dem bei gesteigertem Ressourcenbedarf sofern möglich ein entsprechend größerer Ressourcenanteil zuweisbar ist oder nicht mehr benötigte Ressourcen an den Ressourcen-Pool (RP) zurückgebbar sind, wobei
- ein nicht mehr benötigter Ressourcen-Anteil (RS) an den Ressourcen-Pool (RP) zurückgegeben wird, wenn
- dieser (RS) für eine vorgegebene Zeitspanne nicht benötigt wurde und wenn
- der Ressourcen-Pool (RP) nicht mindestens bis zu einem vorgegebenen Schwellwert gefüllt ist.

11. Vorrichtung zur dynamischen Regelung einer Ressourcenaufteilung auf eine Mehrzahl von um diese Ressourcen konkurrierende Datenströme (RPS) in einem Kommunikationsnetz (1...5), mit

- einem Ressourcen-Pool (RP) zur Bereitstellung von aufzuteilenden Ressourcen, aus dem für jeden konkurrierenden Datenstrom (RPS) ein Ressourcen-Anteil (RS) entnehmbar und diesem Datenstrom zuordbar ist, wobei
- ein Mittel zur dynamischen Anpassung des Ressourcenbedarfs für einen Datenstrom vorgesehen ist, mit dem bei gesteigertem Ressourcenbedarf sofern möglich ein entsprechend größerer Ressourcenanteil zuweisbar ist oder nicht mehr benötigte Ressourcen an den Ressourcen-Pool (RP) zurückgebbar sind, wozu
- ein zeitlicher Verlauf des Ressourcenbedarfs des Datenstroms (RPS) ermittelt wird und mit einem ersten vorgegebenen Schwellwert vergleichen wird, wobei
- sobald der Ressourcenbedarf den ersten Schwellwert erreicht oder überschreitet,
- der zugeordnete Ressourcen-Anteil (RS) bei noch vorhandenen weiteren Ressourcen im Ressourcen-Pool (RP) erhöht wird, oder
- andernfalls erst nach Ablauf einer ersten vorgegebenen Zeitspanne erneut geprüft wird, ob der Ressourcenbedarf nach wie vor oder wieder den ersten Schwellwert erreicht oder überschreitet und ob wieder Ressourcen im Ressourcen-Pool (RP) zur Vergabe bereitstehen, und wobei
- ein nicht mehr benötigter Ressourcen-Anteil (RS) an den Ressourcen-Pool (RP) zurückgegeben wird, wenn
- dieser (RS) für eine zweite vorgegebene Zeitspanne nicht benötigt wurde und wenn
- der Ressourcen-Pool (RP) nicht mindestens bis zu einem zweiten vorgegebenen Schwellwert gefüllt ist.

**12.** Vorrichtung zur dynamischen Regelung einer Ressourcenaufteilung auf eine Mehrzahl von um diese Ressourcen konkurrierende Datenströme (RPS) in einem Kommunikationsnetz (1...5), nach Anspruch 10 oder 11, wobei durch das Mittel zur dynamischen Anpassung des Ressourcenbedarfs für den Fall, dass der Ressourcen-Pool (RP) mindestens bis zu dem vorgegebenen zweiten Schwellwert gefüllt ist, zunächst erneut geprüft wird, ob der zurückzugebende Ressourcen-Anteil (RS) für eine weitere zweite Zeitspanne der vorgegebenen Länge nicht benötigt wird.

**13.** Vorrichtung zur dynamischen Regelung einer Ressourcenaufteilung auf eine Mehrzahl von um diese Ressourcen konkurrierende Datenströme (RPS) in einem Kommunikationsnetz (1...5), nach Anspruch 9, wobei durch das Mittel zur dynamischen Anpassung des Ressourcenbedarfs ein nicht mehr benötigter Ressourcen-Anteil (RS) an den Ressourcen-Pool (RP) zurückgebbar ist, wenn der Ressourcenbedarf einen vorgegebenen unteren Schwellwert erreicht oder unterschreitet.

**14.** Vorrichtung zur dynamischen Regelung einer Ressourcenaufteilung auf eine Mehrzahl von um diese Ressourcen konkurrierende Datenströme (RPS) in einem Kommunikationsnetz (1...5), nach Anspruch 13, wobei durch das Mittel zur dynamischen Anpassung des Ressourcenbedarfs der untere Schwellwert automatisch an den Ressourcenbedarf anpassbar ist, indem

- dieser untere Schwellwert verkleinerbar ist, wenn Ressourcen häufiger als notwendig in den Ressourcen-Pool zurückgegeben werden, oder
- dieser untere Schwellwert vergrößerbar ist, wenn in einer dritten vorgegebenen Zeitspanne kein Ressourcen-Anteil in den Ressourcen-Pool zurückgegeben wurde.

# FIG 1

| AC | RSM |

(1)

| AC | RSM |

(2)

| AC | RSM |

(3)

| RPM |

(4) — 20 Mbps — (5)

# FIG 2

AC request
demanding $r_a$

$u + r_a < r - n_{rel}$ ?

Nein

$t_{rel} := t + d_{rel}$

Ja

# FIG 3

AC release

$t_{rel} > t?$ — Nein → $u > r-n_{rel}?$ — Nein → $r < n_{rel}?$ — Nein →

Ja (from $u > r-n_{rel}?$)

Ja (from $t_{rel} > t?$)

return r to RPM

return $n_{rel}$ to RPM

$t_{rel} := t + d_{rel}$

$u > 0?$ — Nein → $r == 0?$ — Nein → activate release timer($t_{rel}$)

Ja (from $r == 0?$)

Ja (from $u > 0?$)

# FIG 4

release timer timeout

call AC release

# FIG 5

Ac request demanding $r_a$

$u + r_a < w_h r?$ — Nein → request $r_a$ $n_{req}$ from RPM

Ja

FIG 6

resource request
demanding $r_a$

$r_a < R?$ — Nein

$x \rightarrow r_a$

$x \rightarrow R$

$R \rightarrow R-x$

return(x)

FIG 7

resource release
returning $r_a$

$R \rightarrow R + r_a$

FIG 8

Ac release

$u > w_l r?$ — Nein

return $n_{req}(1-w_l)r$
to RPM

Ja

# FIG 9

AC request demanding $r_a$

$t_{req} > t$?

Nein

$u + r_a < w_h r$?

Nein

request $r_a n_{req}$ from RPM

Ja

resources received?

Nein

$t_{req} := t + d_{req}$

Ja

Ja

EP 1 244 256 A2

# FIG 10

```
   ┌─────────────┐
   │  AC release │
   └──────┬──────┘
          ▼
   ┌──────────────┐
   │ i_rel → i_rel+1 │
   └──────┬───────┘
          ▼
      ◇ u ≥ w_l*r? ◇ ──Nein──► ║ return(1-w_l)·r·n_rel ║
          │                    ║        to RPM        ║
          │                           │
          │                           ▼
          │                    ┌──────────────┐
          │                    │ i_dec → i_dec+1 │
          │                    └──────┬───────┘
          │                           ▼
          │                    ◇ i_dec < m_dec? ◇ ──Nein──► │ w_l → w_l*a_dec │
          │                           │
          │◄────────Ja────────────────┘                    │ i_rel → 0 │
          │
          │                                                 │ i_dec → 0 │
          ▼
      ◇ i_rel < l_rel? ◇ ──Nein──► ◇ i_dec > 0? ◇ ──Nein──► │ w_l → w_l*a_inc │
          │                           │Ja
          │                           ▼
          │                    │ i_dec → 0 │
          │                           │
          │                           ▼
          │                    │ i_rel → 0 │
          │Ja                        │
          ▼◄───────────────────────────┘
   ┌─────────────┐
   │             │
   └─────────────┘
```

## FIG 11

## FIG 12

## FIG 13

# FIG 14

```
        ┌─────────────┐
        │  AC release │
        └─────────────┘
               │
               ▼
          ◇ i_rel > 0? ◇ ──Ja──► ┌──────────────────┐
                                   │ i_rel := i_rel - 1│
               │                   └──────────────────┘
             Nein ◄─────────────────────────┘
               │
               ▼
     ◇ i_rel > 0? ◇ ──Nein──► ◇ r > n_rel? ◇ ──Nein──┐
               │                    │                  │
              Ja                   Ja                  ▼
               │                    ▼              ╔═══════════╗
               │              ╔═══════════╗        ║ return r  ║
               │              ║return n_rel║       ║  to RPM   ║
               │              ║  to RPM   ║        ╚═══════════╝
               │              ╚═══════════╝             │
               │                    │ ◄─────────────────┘
               │                    ▼
               │            ┌──────────────┐
               │            │ i_rel := d_rel│
               │            └──────────────┘
               │ ◄────Ja──────────┘
               ▼
          ◇ u > 0? ◇ ──Nein──► ◇ r == 0? ◇ ──Nein──► ╔═══════════════╗
               │                    │                  ║   activate    ║
              Ja                   Ja                  ║ release timer ║
               │ ◄──────────────────┘                  ╚═══════════════╝
               ▼
        ┌─────────────┐
        │             │
        └─────────────┘
```

$i_{rel} > 0?$

$i_{rel} := i_{rel} - 1$

$i_{rel} > 0?$

$r > n_{rel}?$

return $n_{rel}$ to RPM

return r to RPM

$i_{rel} := d_{rel}$

$u > 0?$

$r == 0?$

activate release timer

# FIG 15